# EUROPÄISCHE PATENTSCHRIFT

(11) **EP 0 956 398 B1**
(45) Veröffentlichungstag und Bekanntmachung des Hinweises auf die Patenterteilung: **02.10.2002**
(21) Anmeldenummer: 97954334.5
(22) Anmeldetag: 23.12.1997
(51) Int. Cl.: E03C 1/04, F21V 8/00

(54) **WASSERAUSLAUFARMATUR**
WATER DRAINING FITTINGS
TUYAUTERIE DE VIDANGE D'EAU

(30) Priorität: 24.12.1996 DE 19654359
(43) Veröffentlichungstag der Anmeldung: 17.11.1999
(73) Patentinhaber: Veigel, Gunter, 71229 Leonberg (DE)
(72) Erfinder: Veigel, Gunter, 71229 Leonberg (DE)
(74) Vertreter: KOHLER SCHMID + PARTNER
(86) Internationale Anmeldenummer: DE9703021
(87) Internationale Veröffentlichungsnummer: WO98028496

(56) Entgegenhaltungen:
- EP-A- 0 337 367
- EP-A- 0 446 365
- WO-A-95/29300
- DE-A- 3 135 861

## Beschreibung

Die Erfindung betrifft eine Wasserauslaufarmatur im Sanitärbereich, bei der Licht in einen aus einer Austrittsöffnung eines Armaturenkopfs ausgetretenen Wasserstrahl eingespeist wird, mit einer das Wasser zu der Austrittsöffnung führenden Wasserleitung und mit einer Lichtleitung, die das Licht von einer außerhalb der Wasserauslaufarmatur befindlichen Lichtquelle bis zum Austritt aus mindestens einer Lichtaustrittsöffnung getrennt von der Wasserleitung führt.

Eine derartige Wasserauslaufarmatur ist beispielsweise durch die DE 31 35 861 C2 bekanntgeworden.

Unter Licht wird im folgenden sowohl sichtbares Licht als auch Infrarot(IR)- und Ultraviolett(UV)-Licht verstanden.

Aus der WO 95/29300 ist eine Wasserauslaufarmatur bekannt, bei der Licht in aus Austrittsöffnungen austretende Wasserstrahlen eingespeist wird. Dazu wird Licht im Armaturenkopf über ein transparentes Fenster in das den Armaturenkopf durchströmende Wasser eingespeist, so daß über die Austrittsöffnungen des Wassers auch Licht austritt. Allerdings kann der Großteil des ins Wasser eingespeisten Lichts nicht über die Austrittsöffnungen austreten, was die Intensität des austretenden Lichts erheblich verringert. Außerdem wird durch Kalkablagerungen auf dem transparenten Fenster die Lichteinspeisung und damit auch die austretende Lichtintensität verringert. Zum Einspeisen von IR- oder UV-Licht in das Wasser sind spezielle Fenster erforderlich. Da ein unterbrochener Wasserstrahl kein Licht führen kann, kann der Wasserstrahl bei der bekannten Auslaufarmatur durch in seinem Inneren geführtes Licht nur bis zu seiner Unterbrechung aufgrund Tropfenbildung erhellt werden. Daher sind am Armaturenkopf zusätzliche Lichtquellen, die die austretenden Wasserstrahlen ringförmig umgeben, zum Aufhellen von unterbrochenen Wasserstrahlen vorgesehen, was zu störenden Blendeffekten führen kann.

Bei der aus der DE 31 35 861 C2 bekannten Wasserauslaufarmatur wird in einen aus einer zentralen Wasseraustrittsöffnung eines Armaturenkopfes ausgetretenen Wasserstrahl ein aus mehreren, ringförmig außen um die Wasseraustrittsöffnung angeordneten Lichtleiterfasern ausgetretenes Licht eingespeist. Da das Licht im Armaturenkopf nicht durch Wasser geführt, sondern durch die Lichtleiterfasern erst nach dem Wasseraustritt eingespeist wird, wird die Lichtintensität nicht gemindert und können nur geringe Verkalkungsprobleme auftreten. Das Licht tritt im wesentlichen parallel zum Wasserstrahl über die einzelnen Lichtleiter aus, so daß der Wasserstrahl von einzelnen Lichtstrahlen ringförmig umgeben ist. Das austretende Licht kann, weil nicht abgeschirmt, zu einer Blendung des Benutzers führen. Das Licht dient dabei nicht der Illumination des ausströmenden Wasserstrahls, sondern der Ausleuchtung des Raums unterhalb der Auslaufarmatur. Deshalb erscheint der vom Licht umgebene Wasserstrahl eher dunkel.

Der vorliegenden Erfindung liegt demgegenüber die Aufgabe zugrunde, eine Wasserauslaufarmatur der eingangs genannten Art dahingehend weiterzubilden, daß Licht mit hoher Intensität und möglichst ohne Blendeffekte in einen ausgetretenen Wasserstrahl eingespeist werden kann.

Diese Aufgabe wird erfindungsgemäß dadurch gelöst, daß mehrere Wasseraustrittsöffnungen die mindestens eine zentral angeordnete Lichtaustrittsöffnung ringförmig (außen) umgeben und über einen die Lichtleitung im Bereich des Armaturenkopfs (außen) umgebenden Ringraum an die Wasserleitung angeschlossen sind.

Diese erfindungsgemäße Wasserauslaufarmatur hat damit den wesentlichen Vorteil, daß zentral und mittig ausgetretenes Licht durch die das Licht ringförmig umgebenden Wasserstrahlen nach außen abgeschirmt ist, wodurch Blendeffekte zumindest reduziert sind. Aufgrund des zentralen Lichtaustritts kann das Licht über eine geeignete Austrittsoptik in nichtunterbrochene und unterbrochene Wasserstrahlen eingespeist werden, wozu z.B. ein Lichtverteiler wie ein Reflektor das Licht gezielt in die entsprechenden Richtungen ablenken kann. Die Lichtaustrittsöffnung kann durch eine zu Reinigungszwecken abnehmbare transparente Streu- oder Schutzscheibe verdeckt sein, die Durchbrüche für Puls- oder Massagewasserstrahlen aufweisen kann und auch zur Abstützung eines Reflektors dienen kann, der auch mindestens einen Durchbruch für Puls- oder Massagewasserstrahlen aufweisen kann. Optikteile, wie z.B. ein Reflektor, können teilweise verspiegelt sein.

Bei einer besonders bevorzugten Ausführungsform ist das in der Lichtleitung geführte Licht über eine Optik, insbesondere eine Umlenkoptik, in das eine Ende eines im Armaturenkopf, insbesondere zentral, angeordneten Lichtverteilers einspeisbar, aus dessen anderem Ende das Licht in Richtung auf die Lichtaustrittsöffnung austritt. Dieser Lichtverteiler kann z.B. ein Reflektor oder ein Lichtleiter sein, der das eingespeiste Licht über seine Lichtaustrittsfläche, insbesondere ring- und facettenförmig, entsprechend verteilt und z.B. in eine zylinderförmige Öffnung im Armaturenkopf einsteckbar ist. Von einem herausnehmbaren Lichtverteiler können Kalkablagerungen leicht entfernt werden. Über z.B. einen Lichtleiter oder ein Lichtleitkabel kann das Licht bis an den Armaturenkopf geführt und dann über eine geeignete Optik (Spiegel, Ein-/Auskoppellinse, Lichtleiter etc.) umgelenkt und - insbesondere geweitet, verengt oder parallel - in den Lichtverteiler eingeleitet werden.

Als vorteilhafte Weiterbildung dieser Ausführungsform ist vorgesehen, daß der Lichtverteiler innerhalb einer Öffnung im Armaturenkopf befestigt ist. Z.B. kann ein als Lichtleiterstab ausgestalteter Lichtverteiler im Bereich eines Reflektors über ein Außengewinde in eine, bei Handbrausen meist bereits vorhandene, Gewindeöffnung eingeschraubt werden. Dazu kann eine den Lichtleiterstab umgebende und lagefixierende Ringhülse vorgesehen sein, die über eine Schraubenmutter am Armaturenkopf befestigt ist. Diese Gewindeöffnung kann auch zum Einschrauben einer Schutzscheibe und eines Wassersiebs genutzt werden. Auch jede andere Verbindung (Steck-, Bajonettverbindung,...) ist möglich.

In einer weiteren bevorzugten Weiterbildung weist der Lichtverteiler ausstrittsseitig einen das Licht in Richtung auf die Lichtaustrittsöffnung reflektierenden Reflektor auf, um Intensitätsverluste des austretenden Lichts zu minimieren. Der Reflektor des Lichtverteilers kann ein Spiegel, ein Prisma, ein Lichtleiter sein und auch eine Öffnung, durch die das Wasser strömen kann, aufweisen, wodurch rotierbare Teile, z.B. zur Erzeugung eines pulsierenden Wasserstrahls, angetrieben werden können.

Bei einer weiteren vorteilhaften Ausführungsform ist eine den Strahlengang des Lichts unterbrechende, insbesondere von austretendem Wasser angetriebene, Chopperscheibe im Armaturenkopf vorgesehen. Über die oben genannten rotierbaren Teile kann diese Chopperscheibe mit einer der Ausströmgeschwindigkeit des austretenden Wasserstrahl entsprechenden Drehzahl angetrieben werden, was zu einem "chopperartigen" Wasser-/Lichteffekt führt.

Eine weitere besondere Ausführungsform ist dadurch gekennzeichnet, daß eine oder mehrere in den Strahlengang des Lichts einbringbare farbselektive Farbscheiben und/oder Helligkeitsblenden im Armaturenkopf vorgesehen sind. Die Blenden und Farbscheiben sind drehbar und von Hand einstellbar und dienen der Helligkeitseinstellung bzw. der Erzeugung von Einzelfarben aus weißem Licht, wobei ihre Einstellungen von Hand am Armaturenkopf über geeignete Stellringe und Getriebe erfolgen können. Die Blende bzw. Farbscheiben greifen vorzugsweise in einen Spalt in der Lichtleitung ein.

In einer anderen Ausführungsform ist in der Wasserleitung ein das Licht schaltender und von durchströmendem Wasser betätigbarer Schalter, z.B. eine Ventilklappe, vorgesehen, so daß das austretende Licht in Abhängigkeit vom Wasserfluß automatisch synchron ein- und ausgeschaltet werden kann.

In einer ganz besonderes bevorzugten Ausführungsform, die erfindungsgemäß auch unabhängig von einer speziellen Auslaufarmatur in Alleinstellung vorgesehen sein kann, ist im oder am Armaturenkopf mindestens ein Dispersionskörper im Strahlengang des Lichts vorgesehen, der das Licht in seine Spektralfarben zerlegt. Mit z.B. einem Prisma kann ein Regenbogen in die ausgetretenen Wasserstrahlen eingespeist werden, oder, wenn dem Prisma im Strahlengang eine Farbscheibe nachgeordnet ist, kann eine Einzelfarbe aus dem Licht ausgekoppelt werden. Das Prisma kann vor oder nach der Lichtaustrittsöffnung des Armaturenkopfs zentral oder dezentral sowie justierbar, verschiebbar, schwenkbar oder drehbar angeordnet sein. Es können mehrere Prismen in verschiedenen Einzelgeometrien vorgesehen sein.

Bei einer besonders vorteilhaften Weiterbildung dieser Ausführungsform ist der mindestens eine Dispersionskörper ringförmig ausgebildet, wobei verschiedene Geometrien (geschlossene oder teilweise geöffnete, torus- oder halbkreisförmige Ringe) möglich sind. Durch einen Prismenring läßt sich der Regenbogeneffekt - z.B. bei zwei gegenüberliegenden Prismenringsegmenten - ähnlich zweier Regenbogen, links und rechts, in den ausgetretenen Wasserstrahlen gegenüber einem Einzelprisma verstärken. Durch die Innenöffnung des Prismenrings kann auch ein zentraler Wasserstrahl hindurchströmen.

Eine andere Weiterbildung kennzeichnet sich dadurch, daß das Licht in den mindestens einen Dispersionskörper über einen Lichtverteiler, wie z.B. einen Reflektor oder Lichtleiter, mit auf den mindestens einen Dispersionskörper abgestimmter Austrittsseite einspeisbar ist. Z.B. kann der Lichtleiter lichtaustrittsseitig eine Schräge aufweisen, um Licht unter einem bestimmten Winkel in das Prisma einzuleiten.

Bei einer bevorzugten Ausführungsform ist am Armaturenkopf oder an einer Wand mindestens ein auf einen ausgetretenen Wasserstrahl entgegen seiner Austrittsrichtung gerichteter Lichtstrahl vorgesehen. Unter einem bestimmten Blickwinkel zum austretenen Wasser ist dann ein Regenbogen zu sehen. Z.B. kann dieser Lichtstrahl von einer in einer Duschwand integrierten Lichtquelle ausgesandt werden. Zur Verstärkung des optischen Effekts können auch zusätzlich Prismen und eine transparente Scheibe oder eine Art Nebeldusche vorgesehen sein.

In ganz besonderes bevorzugter Ausführungsform ist ein kombinierter Licht-Wasserschlauch über Kupplungsstücke an die Auslaufarmatur angeschlossen, und die Lichtleitung ist aus einem Lichtleiterrohr oder aus einzelnen Lichtleiterschenkeln oder Lichtleiterfasern zusammengesetzt, die die Wasserleitung ummantelnd umgeben, und das die Wasserleitung ummantelnde Lichtleiterrohr ist bzw. die einzelnen die Wasserleitung ummantelnden Lichtleiterschenkel oder Lichtleiterfasern sind auf der zum Armaturenkopf weisenden Anschlußseite der Lichtleitung zu einem gemeinsamen Lichtleiter oder Lichtleiterbündel zusammengefaßt. Dies führt zu getrennten Lichtund Wasseranschlüssen (Verschraubung) und so zu einem vereinfachten Schlauch-Armaturen-Übergang. Der Transport des Lichts in der Armatur erfolgt vorzugsweise über einen Lichtleiter. Der zusammengefaßte Lichtleiter bzw. das Lichtleiterbündel kann bis weit in den Armaturenkopf, z.B. bis zur Umlenkung oder bis zur Lichtaustrittsöffnung, eingeführt sein, so daß eine Befestigung des Lichtanschlusses am Armaturenkopf entfallen kann. Der Lichtleiter bzw. das Lichtleiterbündel kann auch über eine im Armaturenkopf befindliche Buchsenverbindung wasserdicht befestigt und lagefixiert sein. Über eine entsprechende Optik wird im Lichtleiter oder Lichtleiterbündel geführtes Licht in Richtung Lichtaustrittsöffnung gelenkt.

Weitere Vorteile der Erfindung ergeben sich aus der Beschreibung und der Zeichnung. Die gezeigten und beschriebenen Ausführungsformen sind nicht als abschließende Aufzählung zu verstehen, solange sie unter die beanspruchte Erfindung fallen, wie sie in den Ansprüchen definiert wird. Es zeigen:
- Fig. 1a: eine als Handbrause ausgebildete erfindungsgemäße Wasserauslaufarmatur mit einer ersten Lichtführungsvariante, teilweise dargestellt in einem Längsschnitt;
- Fig. 1b: ein Detailansicht eines Kupplungsstücks der Wasserauslaufarmatur in Fig. 1;
- Fig. 1c: eine stirnseitige Ansicht des Kupplungsstücks der Fig. 1b;
- Fig. 2: eine zweite Lichtführungsvariante mit einem Dispersionsprisma;
- Fig. 3: eine dritte Lichtführungsvariante mit einem Dispersionsprisma;
- Fig. 4: eine vierte Lichtführungsvariante mit einem Prismenring;
- Fig. 5: schematisch eine Farbmischbatterie; und
- Fig. 6: einen kombinierten Licht-Wasserschlauch mit Übergangsstücken, getrennt für Licht und Wasser.

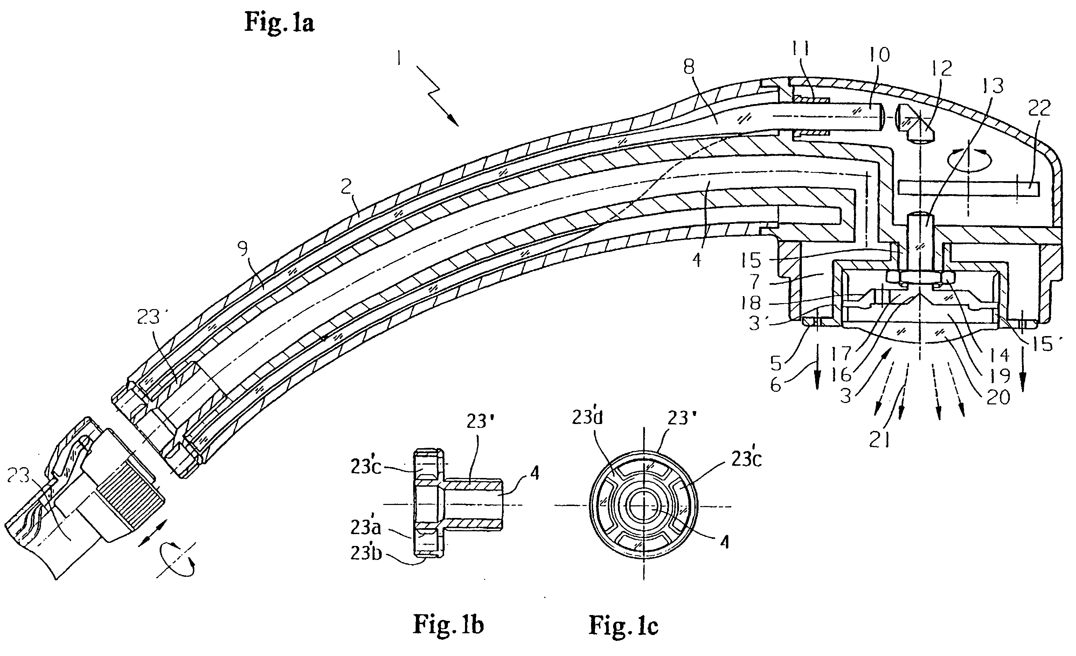

Fig. 1a zeigt eine Wasserauslaufarmatur 1 mit einem hohlen Gehäuse 2 und einem Armaturenkopf 3. In der Wasserauslaufarmatur 1 ist eine Wasserleitung 4 geführt, aus der über am Armaturenkopf 3 angeordnete Wasseraustrittsöffnungen 5 Wasserstrahlen 6 austreten können. Diese Wasseraustrittsöffnungen 5 sind am Armaturenkopf 3 ringförmig angeordnet und sind an die Wasserleitung 4 über einen Ringraum 7 angeschlossen.

In der Wasserauslaufarmatur 1 verläuft außerdem eine Lichtleitung 8, deren Lichtleiterschenkel oder Lichtleiterrohr oder Lichtleiterfasern 9 die Wasserleitung 4 ummantelnd umgeben und armaturenkopfseitig zu einem von der Wasserleitung 4 getrennten, gemeinsamen Lichtleiter oder Lichtleiterbündel 10 zusammengefaßt sind. Dieser Lichtleiter oder Lichtleiterbündel 10 endet im Armaturenkopf 3 und ist mittels einer Buchse 11 wasserdicht lagefixiert.

Das in der Lichtleitung 8 geführte und über den Lichtleiter oder das Lichtleiterbündel 10 austretende Licht wird über eine Umlenkoptik 12 (Ein-/Auskopplungslinsen, Spiegel, Lichtleiter, ... ) in einen Lichtverteiler 13 eingekoppelt. Dieser Lichtverteiler 13 ist im Ausführungsbeispiel ein stabförmiger Lichtleiter mit Außengewinde 15'. Der Lichtverteiler 13 ist durch eine Außengewindehülse 15 des Armaturenkopfes 3 gesteckt und über das Außengewinde in eine Ringraumhülse 3' im Armaturenkopf 3 wasserdicht eingeschraubt, wobei eine Mutter 14 die Ringraumhülse trägt. Das in dem Lichtverteiler 13 geführte Licht wird über innere Reflektionswände 16 in einen radialen Abschnitt 17 des Lichtverteilers 13 und über äußere Reflektionswände 18 in Richtung auf die Lichtaustrittsöffnung 19 umgelenkt und tritt aus dieser großflächig ringflächig aus. Durch eine transparente Schutz-/Streuscheibe 20 ist die Lichtaustrittsöffnung 19 zusätzlich wasserdicht verschlossen. Im Bereich des Armaturenkopfes 3 ist ein abnehmbarer Deckel (nicht gezeigt) für Reinigungs- und Wartungszwecke am Gehäuse 2 vorgesehen.

Das aus dem Armaturenkopf 3 ausgetretene Licht 21, das von den Wasserstrahlen 6 ringförmig umgeben ist, tritt in diese Wasserstrahlen 6 ein und wird in ihnen geführt, wodurch die Wasserstrahlen 6 leuchten. Über einen Farbfilter oder eine Blende 22, die im Armaturenkopf 3 drehbar gelagert ist und in den Strahlengang des Lichts eingreift, kann eine Einzelfarbe aus weißem Licht bzw. die Helligkeit des Lichts von außen eingestellt werden.

Die Wasserauslaufarmatur 1 ist über einen Anschluß 23' an einen kombinierten Licht-Wasserleitungsschlauch 23 angeschlossen, wobei über ein Kupplungsstück 23' ein ungestörter Wasser- und Lichtübergang zwischen dem Schlauch 23 und der Wasserauslaufarmatur 1 sichergestellt ist.

Im Armaturenkopf 3 können noch Reflektoren zur besseren Lichtführung, eine von den Armaturenkopf 3 durchströmendem Wasser angetriebene, den Strahlengang des Lichts unterbrechende Chopperscheibe sowie ein das Licht schaltender, von durchströmendem Wasser betätigter Schalter vorgesehen sein.

Das der Wasserauslaufarmatur 3 über den Schlauch 23 zugeführte Licht kann aus einer an einer Wand vorgesehenen Lichtsteckdose (nicht gezeigt) oder aus einer Farbarmatur (nicht gezeigt) stammen. Eine solche Farbarmatur weist einen Lichtausgang und einen in den Strahlengang des Lichts eingreifenden farbselektiven Filter auf, dessen Farbselektion von außen einstellbar ist. Über den Farbfilter kann eine gewünschte Einzelfarbe aus weißem Licht, das z.B. aus einer Lichtsteckdose stammt, ausgekoppelt werden. Die Farbeinstellung erfolgt vorzugsweise manuell über einen mit dem Farbfilter verbundenen Drehgriff. Durch Verkippen dieses Drehgriffs läßt sich auch die Helligkeit über eine vor oder nach dem Farbfilter im Strahlengang angeordnete Blende einstellen.

In den Fign. 1b und 1c ist das Kupplungsstück 23' dargestellt. Eine Wasserleitung im Schlauch 23 wird in ein Gewinde 23'a und eine diese Wasserleitung ummantelnd umgebende Lichtleitung in ein Gewinde 23'b des Kupplungsstücks 23' eingeschraubt. Das Gewinde 23'b ist über Stege 23'd mit dem Gewinde 23'a verbunden, so daß das in der Lichtleitung des Schlauchs 23 geführte Licht über ringsegmentförmige Einspeisungsöffnungen 23'c in z.B. die Lichtleiterfasern 9 eintreten kann. Durch diese spezielle Gewindetechnik zweier einschraubbarer Gewinde wird eine platzsparende Verbindung geschaffen.

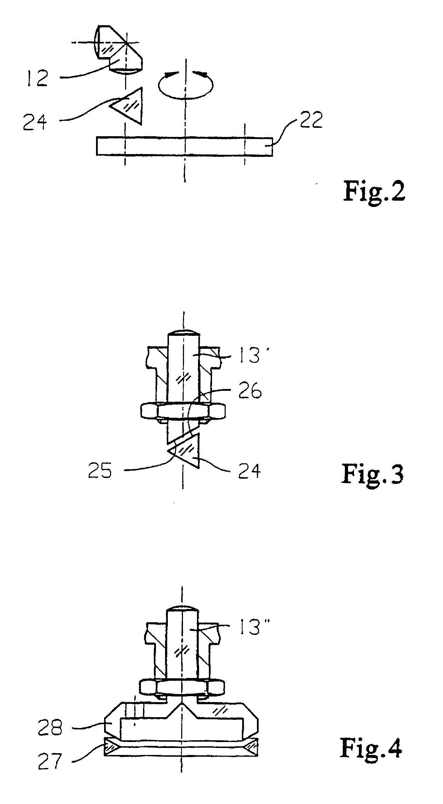

Die Fign. 2 bis 4 zeigen mögliche Modifikationen im Strahlengang der in Fig. 1a gezeigten Auslaufarmatur 1. In Fig. 2 ist zwischen der Umlenkoptik 12 und dem drehbaren Farbfilter 22 ein Dispersionskörper 24 in Form eines Dispersionsprismas vorgesehen, das weißes Licht in seine Spektralfarben zerlegt. Über das nachgeordnete Farbfilter 22 kann eine gewünschte Einzelfarbe ausgekoppelt werden, so daß farbiges Licht aus der Auslaufarmatur 1 austritt und die Wasserstrahlen 6 farbig leuchten.

In Fig. 3 ist der ebenfalls als Prisma ausgestaltete Dispersionskörper 24 dem Lichtverteiler 13' nachgeordnet, wobei für eine optimale Lichteinkopplung die Lichtaustrittsseite 25 des Lichtverteilers 13' auf die Lichteintrittsseite des Prismas abgestimmt ist. Mit diesem im Strahlengang des Lichts angeordneten Dispersionskörper 24 können Regenbogenfarben in die ausgetretenen Wasserstrahlen 6 bzw. ein Regenbogen in den Wasserstrahlen 6 erzeugt werden.

Um diesen Regenbogeneffekt zu verstärken, ist in Fig. 4 der Dispersionskörper 27 ringförmig ausgebildet, in den das im Lichtverteiler 13'' geführte Licht über einen ringförmigen Abschnitt 28 eingespeist wird.

Um einen Regenbogen zu erzeugen, kann auch am Armaturenkopf 3 oder an einer Wand ein auf die ausgetretenen Wasserstrahlen 6 entgegen ihrer Austrittsrichtung gerichteter Lichtstrahl (nicht gezeigt) vorgesehen sein. Unter einem bestimmten Blickwinkel zu den ausgetretenen Wasserstrahlen 6 ist dann ein Regenbogen zu sehen. Z.B. kann dieser Lichtstrahl von einer in eine Duschwand integrierten Lichtquelle ausgesandt werden.

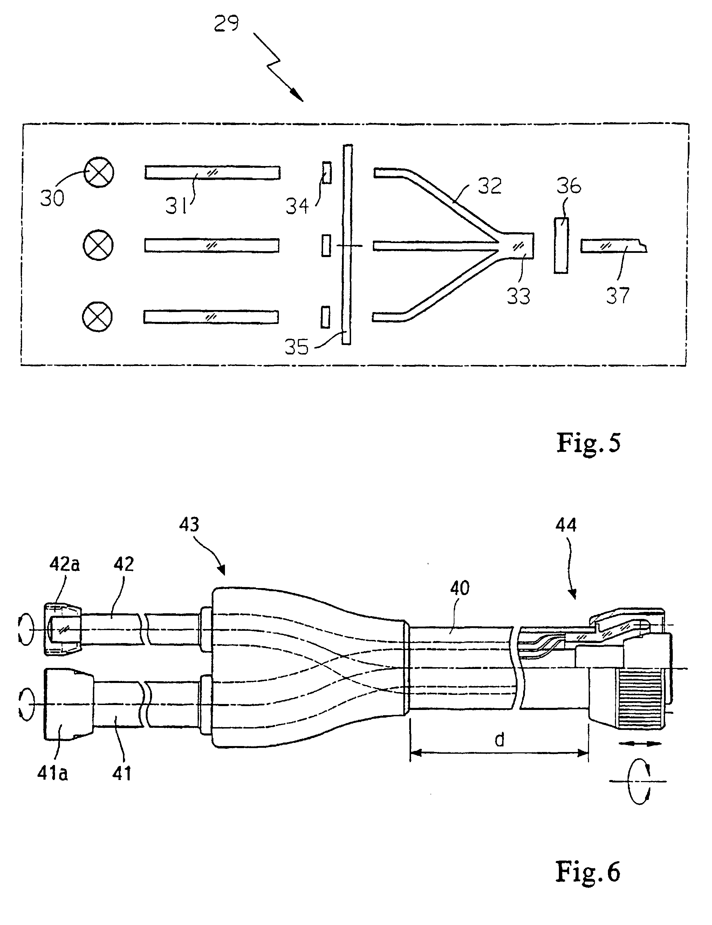

Fig. 5 zeigt schematisch eine Farbmischbatterie 29, mit der beliebig farbiges Licht erzeugt und z.B. in die oben beschriebene Wasserauslaufarmatur 1 eingespeist werden kann. In der Farbmischbatterie 29 sind drei verschiedenfarbige Lichtquellen 30 vorgesehen, deren Licht jeweils über Lichtleiter 31 separat und dann über Lichtleiterarme 32 zu einem gemeinsamen Lichtleiterabschnitt 33 zusammengeführt ist. Zwischen den einzelnen Lichtleitern 31 und den Lichtleiterarmen 32 ist im Strahlengang des Lichts jeweils eine Helligkeitsblende 34 sowie eine gemeinsame Lochblende 35 vorgesehen. Über die Helligkeitsblenden 34 läßt sich jeweils die Intensität des von einer Lichtquelle 30 ausgestrahlten Lichts einstellen. Die Lochblende 35 ist in acht Drehpositionen drehbar, in denen entweder nur das Licht einer Lichtquelle 30 oder von zwei Lichtquellen 30 oder von allen drei Lichtquellen 30 durchgelassen wird. Im gemeinsamen Lichtleiterabschnitt 33 ergibt sich die Summenfarbe der durchgelassenen Einzelfarben. Über eine Helligkeitsblende 36 läßt sich die Lichtintensität der Summenfarbe einstellen, bevor das Licht über einen Lichtleiter 37 aus der Farbmischbatterie 29 austritt.

Fig. 6 zeigt in Alleinstellung einen kombinierten Licht-Wasserschlauch 40, dessen Wasserleitung 41 und Lichtleitung 42 eingangsseitig an eine Wasserleitung und an eine Lichtquelle (Lichtsteckdose, Farbarmatur, Farbmischbatterie) anschließbar und über schraubbare Muffen 41a, 42a befestigbar sind. In einem Übergangsstück 43 wird die Lichtleitung 42 in eine die Wasserleitung 41 auf einem Abschnitt d umgebende Lichtleitung überführt. Vorzugsweise besteht auf diesem Abschnitt d die Lichtleitung 42 aus einzelnen Lichtleiterfasern, wodurch der Schlauch 40 flexibel bzw. biegsam ist. Über ein ausgangsseitiges, schraubbares Kupplungselement 44 erfolgt der Anschluß an die Wasserauslaufarmatur 1, z.B. mit Hilfe des in den Fign. 1b und 1c gezeigten Kupplungsstücks 23'. Der besondere Vorteil besteht darin, daß zwei Medien, nämlich Wasser und Licht, durch Ummantelung in einem Schlauch 40 gemeinsam geführt und an den Enden über gleichartige oder unterschiedliche Übergangs- und Kupplungselemente wieder aufgetrennt sind.

## Patentansprüche

1. Wasserauslaufarmatur (1) im Sanitärbereich, bei der Licht in einen aus einer Austrittsöffnung (5) eines Armaturenkopfs (3) ausgetretenen Wasserstrahl (6) eingespeist wird, mit einer das Wasser zu der Austrittsöffnung (5) führenden Wasserleitung (4) und mit einer Lichtleitung (8), die das Licht von einer außerhalb der Wasserauslaufarmatur (1) befindlichen Lichtquelle bis zum Austritt aus mindestens einer Lichtaustrittsöffnung (19) getrennt von der Wasserleitung (4) führt,
**dadurch gekennzeichnet,**
**daß** mehrere Wasseraustrittsöffnungen (5) die mindestens eine zentral angeordnete Lichtaustrittsöffnung (19) ringförmig umgeben und über einen die Lichtleitung (8) im Bereich des Armaturenkopfs (3) umgebenden Ringraum (7) an die Wasserleitung (4) angeschlossen sind.

2. Auslaufarmatur nach Anspruch 1, **dadurch gekennzeichnet, daß** das in der Lichtleitung (8) geführte Licht über eine Optik, insbesondere eine Umlenkoptik (12), in das eine Ende eines im Armaturenkopf (3) angeordneten Lichtverteilers (13, 13', 13'') einspeisbar ist, aus dessen anderem Ende das Licht in Richtung auf die Lichtaustrittsöffnung (19) austritt.

3. Auslaufarmatur nach Anspruch 2, **dadurch gekennzeichnet, daß** der Lichtverteiler (13, 13', 13'') innerhalb einer Öffnung im Armaturenkopf (3) befestigt ist.

4. Auslaufarmatur nach Anspruch 2 oder 3, **dadurch gekennzeichnet, daß** der Lichtverteiler (13', 13', 13'') ausstrittsseitig einen das Licht in Richtung auf die Lichtaustrittsöffnung (19) reflektierenden Reflektor aufweist.

5. Auslaufarmatur nach einem der vorhergehenden Ansprüche, **dadurch gekennzeichnet, daß** eine den Strahlengang des Lichts unterbrechende, insbesondere von austretendem Wasser angetriebene, Chopperscheibe im Armaturenkopf (3) vorgesehen ist.

6. Auslaufarmatur nach einem der vorhergehenden Ansprüche, **dadurch gekennzeichnet, daß** eine oder mehrere in den Strahlengang des Lichts einbringbare farbselektierende Farbscheiben (22) und/oder Helligkeitsblenden im Armaturenkopf (3) vorgesehen sind.

7. Auslaufarmatur nach einem der vorhergehenden Ansprüche, **dadurch gekennzeichnet, daß** in der Wasserleitung (4) ein das Licht schaltender und von durchströmendem Wasser betätigbarer Schalter vorgesehen ist.

8. Auslaufarmatur, nach einem der vorhergehenden Ansprüche, **dadurch gekennzeichnet, daß** im oder am Armaturenkopf (3) mindestens ein Dispersionskörper, insbesondere ein Prisma, (24, 27) im Strahlengang des Lichts vorgesehen ist.

9. Auslaufarmatur nach Anspruch 8, **dadurch gekennzeichnet, daß** der mindestens eine Dispersionskörper (27) ringförmig ausgebildet ist.

10. Auslaufarmatur nach Anspruch 8 oder 9, **dadurch gekennzeichnet, daß** das Licht in den mindestens einen Dispersionskörper (24, 27) über einen Lichtverteiler (13, 13', 13'') mit auf das mindestens eine Prisma (24, 27) abgestimmter Austrittsseite (25) einspeisbar ist.

11. Auslaufarmatur nach einem der vorhergehenden Ansprüche, **dadurch gekennzeichnet, daß** am Armaturenkopf (3) oder an einer Wand mindestens ein auf einen ausgetretenen Wasserstrahl (6) entgegen seiner Austrittsrichtung gerichteter Lichtstrahl vorgesehen ist.

12. Auslaufarmatur nach einem der vorhergehenden Ansprüche, **dadurch gekennzeichnet, daß** ein Licht-Wasserschlauch (23; 40) über Kupplungsstücke (23') an die Auslaufarmatur angeschlossen ist, daß die Lichtleitung (8) aus einem Lichtleiterrohr oder aus einzelnen Lichtleiterschenkeln oder Lichtleiterfasern (9) zusammengesetzt ist, die die Wasserleitung (4) ummantelnd umgeben, und daß das die Wasserleitung (4) ummantelnde Lichtleiterrohr bzw. die einzelnen die Wasserleitung (4) ummantelnden Lichtleiterschenkel oder Lichtleiterfasern (9) auf der zum Armaturenkopf (3) weisenden Anschlußseite der Lichtleitung (8) zu einem gemeinsamen Lichtleiter oder Lichtleiterbündel (10) zusammengefaßt sind.

## Claims

1. Water draining fixture (1) for plumbing applications with which light is introduced into a water jet (6) exiting from an outlet opening (5) of a fixture head (3), having a water conduit (4) guiding the water to the outlet opening (5) and a light guide (8) which guides the light, separate from the water conduit (4), from a light source located outside of the water draining fixture (1) up to exit out of at least one light outlet opening (19), **characterized in that** a plurality of water outlet openings (5) surround the at least one centrally disposed light outlet opening (19) in a ring-shaped fashion and are connected to the water conduit (4) via an annular space (7) surrounding the light guide (8) in the vicinity of the fixture head (3).

2. Draining fixture according to claim 1, **characterized in that** the light guided in the light guide (8) can be introduced via optics into one end of a light distributor (13, 13', 13") disposed in the fixture head (3), preferentially via a deflection optics (12), with the light exiting out of the other end in the direction towards the light outlet opening (19).

3. Draining fixture according to claim 2, **characterized in that** the light distributor (13, 13', 13") is mounted within an opening in the fixture head (3).

4. Draining fixture according to claim 2 or 3, **characterized in that** the light distributor (13, 13', 13") has a reflector at its output side to reflect the light towards the light outlet opening (19).

5. Draining fixture according to any one of the preceding claims, **characterized in that** a chopper plate is disposed in the fixture head (3) for interrupting the optical path of the light and is preferentially driven by the exiting water.

6. Draining fixture according to any one of the preceding claims, **characterized in that** one or more color-selective colored plates (22) and/or luminosity collimators are disposed in the fixture head (3) and can be introduced into the optical path of the light.

7. Draining fixture according to any one of the preceding claims, **characterized in that** a switch is disposed in the water conduit (4) for switching the light and is operated by the flowing water.

8. Draining fixture according to any one of the preceding claims, **characterized in that** at least one dispersive body, in particular a prism (24, 27), is disposed in the optical path of the light in or at the fixture head (3).

9. Draining fixture according to claim 8, **characterized in that** the at least one dispersive body (27) is ring-shaped.

10. Draining fixture according to claim 8 or 9, **characterized in that** the light can be fed into the at least one dispersive body (24, 27) via a light distributor (13, 13', 13") having an output side (25) matched to the at least one prism (24, 27).

11. Draining fixture according to any one of the preceding claims, **characterized in that** at least one light beam directed opposite to the outlet direction of the exiting water jet (6) is provided on the fixture head (3) or on a wall.

12. Draining fixture according to any one of the preceding claims, **characterized in that** a light-water hose (23; 40) is connected via coupling members (23') to the draining fixture and the light guide (8) comprises a light pipe or individual light guide legs or optical fibres (9) which are combined and which surround and jacket the water conduit (4), with the light pipe or the individual light guide legs or light guide fibres (9) jacketing the water conduit (4) being joined together into a common light guide or light guide bundle (10) at the connecting side of the light guide (8) facing the fixture head (3).

## Revendications

1. Garniture de sortie d'eau (1) dans le secteur sanitaire, dans laquelle de la lumière est injectée dans un jet d'eau (6) sortant d'une ouverture de sortie (5) d'une tête de robinetterie (3), comprenant une conduite d'eau (4) qui mène l'eau jusqu'à l'ouverture de sortie (5), et un guide de lumière (8) qui mène la lumière, séparément de la conduite d'eau (4), depuis une source de lumière qui se trouve à l'extérieur de la garniture de sortie d'eau (1) jusqu'à la sortie via au moins une ouverture de sortie de lumière (19),
**caractérisée en ce que** plusieurs ouvertures de sortie d'eau (5) entourent de façon annulaire de ladite au moins une ouverture de sortie de lumière (19) agencée au centre, et sont raccordées à la conduite d'eau (4) via une chambre annulaire (7) qui entoure le guide de lumière (8) dans la région de la tête de robinetterie (3).

2. Garniture de sortie selon la revendication 1, **caractérisée en ce que** la lumière menée dans le guide de lumière (8) est injectée, via un dispositif optique et en particulier un dispositif optique de renvoi (12), dans l'une des extrémités d'un répartiteur de lumière (13, 13', 13") agencé dans la tête de robinetterie (3), la lumière sortant de l'autre extrémité dudit répartiteur en direction de l'ouverture de sortie de lumière (19).

3. Garniture de sortie selon la revendication 2, **caractérisée en ce que** le répartiteur de lumière (13, 13', 13") est fixé à l'intérieur d'une ouverture dans la tête de robinetterie (3).

4. Garniture de sortie selon l'une ou l'autre des revendications 2 et 3, **caractérisée en ce que** le répartiteur de lumière (13, 13', 13") comporte du côté sortie un réflecteur qui réfléchit la lumière en direction de l'ouverture de sortie de lumière (19).

5. Garniture de sortie selon l'une des revendications précédentes, **caractérisée en ce qu'**il est prévu dans la tête de robinetterie (3) une plaque d'interruption, qui interrompt le trajet de la lumière, et en particulier entraînée par l'eau sortante.

6. Garniture de sortie selon l'une des revendications précédentes, **caractérisée en ce qu'**il est prévu dans la tête de robinetterie (3) une ou plusieurs plaques colorées (22) assurant une sélection de couleur et susceptibles d'être introduites dans le trajet de la lumière et/ou des diaphragmes de luminosité.

7. Garniture de sortie selon l'une des revendications précédentes, **caractérisée en ce qu'**il est prévu dans la conduite d'eau (4) un commutateur destiné à commander la lumière et actionné par l'eau en écoulement.

8. Garniture de sortie selon l'une des revendications précédentes, **caractérisée en ce qu'**il est prévu dans ou sur la tête de robinetterie (3) au moins un corps de dispersion et en particulier un prisme (24, 27) dans le trajet de la lumière.

9. Garniture de sortie selon la revendication 8, **caractérisée en ce que** ledit corps de dispersion (27) est réalisé sous forme annulaire.

10. Garniture de sortie selon l'une ou l'autre des revendications 8 et 9, **caractérisée en ce que** la lumière est injectée dans ledit corps de dispersion (24, 27) au moyen d'un répartiteur de lumière (13, 13', 13") présentant une face de sortie (25) orientée vers ledit au moins un prisme (24, 27).

11. Garniture de sortie selon l'une des revendications précédentes, **caractérisée en ce qu'**il est prévu sur la tête de robinetterie (3) ou sur sa paroi au moins un rayon de lumière dirigé vers un jet d'eau sortant (6) et en sens opposé sa direction de sortie.

12. Garniture de sortie selon l'une des revendications précédentes, **caractérisée en ce qu'**un tuyau de guidage de lumière et d'eau (23 ; 40) est raccordé à la garniture de sortie via des éléments de raccord (23'), **en ce que** le guide de lumière (8) est composé d'un tube guide de lumière ou de tiges ou de fibres guides de lumière individuelles (9) qui entourent la conduite d'eau (4) à la manière d'une enveloppe, et **en ce que** le tube, les tiges ou les fibres guides de lumière qui entourent la conduite d'eau (4) sont regroupées pour former un guide de lumière ou un faisceau de guide de lumière (10) commun du côté du guide de lumière (8) à la sortie tournée vers la tête de robinetterie (3).
